# EUROPÄISCHE PATENTSCHRIFT

(11) **EP 1 083 990 B1**
(45) Veröffentlichungstag und Bekanntmachung des Hinweises auf die Patenterteilung: **03.07.2002**
(21) Anmeldenummer: 99929065.3
(22) Anmeldetag: 30.04.1999
(51) Int. Cl.: B01J 23/63

(54) **OXIDATIONSKATALYSATOR UND VERFAHREN ZUR KATALYTISCHEN OXIDATION**
OXIDATION CATALYST AND METHOD FOR CATALYTIC OXIDATION
CATALYSEUR D'OXYDATION ET PROCEDE D'OXYDATION CATALYTIQUE

(30) Priorität: 06.05.1998 DE 19820251
(43) Veröffentlichungstag der Anmeldung: 21.03.2001
(73) Patentinhaber: SIEMENS AKTIENGESELLSCHAFT, 80333 München (DE)
(72) Erfinder: WITZEL, Frank, D-96215 Lichtenfels (DE); PAJONK, Günther, D-96199 Zapfendorf (DE); FABER, Michael, D-96465 Neustadt (DE)
(86) Internationale Anmeldenummer: DE9901280
(87) Internationale Veröffentlichungsnummer: WO9956872

(56) Entgegenhaltungen:
- EP-A- 0 043 251
- EP-A- 0 208 434
- EP-A- 0 421 169
- EP-A- 0 455 491
- EP-A- 0 653 238
- EP-A- 0 707 882

## Beschreibung

Die Erfindung betrifft einen Oxidationskatalysator mit einem Träger, auf den eine katalytisch aktive Komponente oder eine Aktivschicht aufgebracht ist. Die Erfindung betrifft auch ein Verfahren zur katalytischen Oxidation von Kohlenmonoxid und/oder Ammoniak und/oder Kohlenwasserstoffen.

Die US 4,085,193 beschreibt ein Verfahren zur Reduktion von Stickoxiden in Abgasen. Es wird eine katalytisch aktive Verbindung vorgeschlagen, welche aus Titanoxid und mindestens einem weiteren Übergangsmetalloxid besteht.

Aus der DE 195 34 497 A1, der EP 0 665 047 A1, der US 5,145,825 und der JP 59-115745 A sind Katalysatoren, die zur Oxidation eingesetzt werden können, bekannt, die auf einem Titandioxid enthaltenden Träger ein elementar vorliegendes Edelmetall, insbesondere Platin, aufweisen.

Aufgabe der Erfindung ist die Angabe eines kostengünstigen und dauerhaft stabilen Oxidationskatalysators. Weitere Aufgabe der Erfindung ist die Angabe eines Verfahrens zur katalytischen Oxidation, welches einen kostengünstigen und langzeitbeständigen Katalysatorbetrieb ermöglicht.

Erfindungsgemäß wird die auf einen Oxidationskatalysator gerichtete Aufgabe für einen Oxidationskatalysator mit einem Träger, auf den die katalytisch aktive Komponente, vorzugsweise als eine Schicht oder als eine Imprägnierung des Trägers, aufgebracht ist, wobei der Träger Titandioxid und vorzugsweise zusätzlich Wolframtrioxid und die katalytisch aktive Komponente elementar vorliegendes Platin aufweist, dadurch gelöst, daß neben dem Platin wenigstens eine der folgenden Verbindungen vorliegt: ZrO₂, Nb₂O₅, CaO.

Eine Imprägnierung des Trägers durch die Komponente bedeutet, daß das Platin unterschiedlich weit und stark in den Träger eindringt.

Ein solcher Oxidationskatalysator eignet sich prinzipiell zur Oxidation von Kohlenmonoxid und/oder Ammoniak und/oder Kohlenwasserstoffen und damit insbesondere zur Beseitigung derartiger Schadstoffe in einem Abgas einer Verbrennungsanlage.

Der Katalysator weist eine besonders hohe Schwefelresistenz auf.

Vorzugsweise ist der Träger bis auf Verunreinigungen vollständig aus TiO₂ oder vollständig aus TiO₂ und WO₃ ausgeführt.

In einer weiteren vorteilhaften Ausgestaltung ist der Träger aus Cordierit als einem Grundmaterial und aus TiO₂ oder aus TiO₂ und WO₃ als eine auf dem Grundmaterial angeordnete Schicht aufgebaut, auf welche wiederum die katalytisch aktive Komponente aufgebracht ist. Bei einem solchen Träger wird das besonders kostengünstige Cordierit als Grundmaterial beibehalten. Eine Titandioxid-Schicht, der vorzugsweise WO₃ beigemischt ist, wird auf das Cordierit aufgebracht. Diese Schicht wird dann mit der katalytisch aktiven Komponente beschichtet oder imprägniert. Die katalytisch aktive Komponente kann dabei bis in das Cordierit vordringen.

Die auf ein Verfahren gerichtete Aufgabe wird erfindungsgemäß gelöst durch ein Verfahren zur katalytischen Oxidation von Kohlenmonoxid und/oder Ammoniak und/oder Kohlenwasserstoffen in einem Abgasstrom einer Verbrennungsanlage, insbesondere bei einem Dieselmotor, wobei der Abgasstrom über die katalytisch aktive Schicht geleitet wird. Die Vorteile eines solchen Verfahrens ergeben sich entsprechend den obigen Ausführungen in den Vorteilen des Oxidationskatalysators.

Die Erfindung wird anhand einer Zeichnung schematisch und nicht maßstäblich beispielhaft näher erläutert. Es zeigen:
- FIG 1: einen Querschnitt der Oberfläche eines Oxidationskatalysators mit einem Träger aus Titandioxid und Wolframtrioxid,
- FIG 2: einen Querschnitt der Oberfläche eines Oxidationskatalysators mit einem Träger aus Cordierit und Titandioxid und Wolframtrioxid, und

Gleiche Bezugszeichen haben in den Figuren die gleiche Bedeutung.

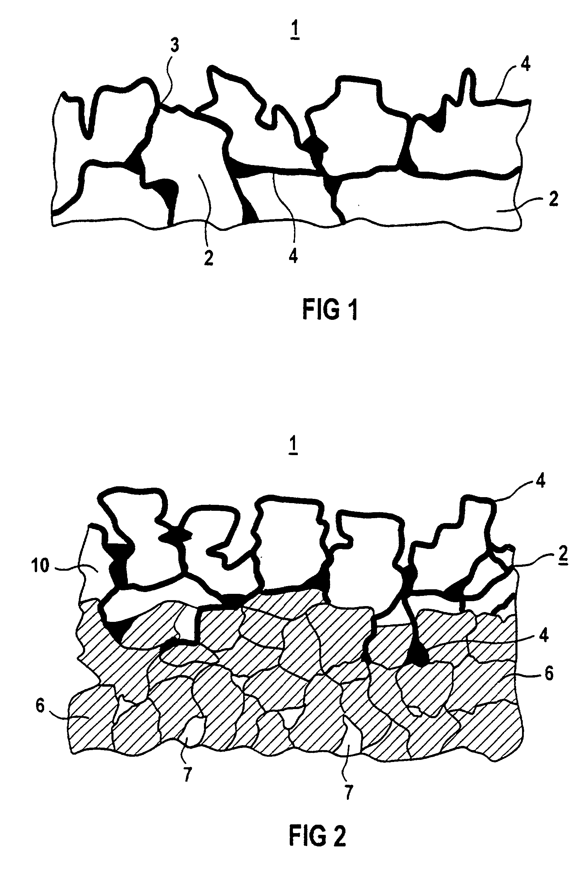

Figur 1 zeigt einen Querschnitt der Oberfläche eines Oxidationskatalysators 1. Der Oxidationskatalysator 1 weist einen Träger 2 auf. Dieser Träger 2 ist aus gemeinsam ausgefälltem Titandioxid und Wolframtrioxid gebildet. Der Träger 2 weist eine stark verkrümmte, zerklüftete Oberfläche 3 auf und hat eine körnige Struktur. Auf die Oberfläche 3 ist eine katalytisch aktive Komponente 4 aus Platin und einer der genannten Verbindungen aufgebracht. Dabei gibt es keine scharfe Grenze zwischen dem Trägermaterial 2 und der Komponente 4. Vielmehr wird auch von einer Edelmetallimprägnierung gesprochen. Das heißt, daß die Komponente 4 unterschiedlich weit und stark in den Träger 2 eindringt. Dabei füllt das Edelmetall 4 Poren und Hohlräume zwischen den Korngrenzen des Trägers 2. Durch die stark verkrümmte oder zerklüftete Oberfläche 3 des Trägers 2 ergibt sich eine große, katalytisch aktive Oberfläche der katalytisch aktiven Komponente 4. Der Träger 2 ist aus Titandioxid und Wolframtrioxid gebildet. Durch die hohe Schwefelresistenz ist der Oxidationskatalysator 1 über eine lange Zeitdauer nahezu unbeeinträchtigt katalytisch aktiv.

Figur 2 zeigt einen Querschnitt des Oxidationskatalysators 1, bei dem der Träger 2 aus einem Grundmaterial 6 aus Cordierit und einer Schicht 10 aus Titandioxid und Wolframtrioxid auf gebaut ist, welche auf die Oberfläche des Grundmaterials 6 aufgebracht ist. Auf die Schicht 10 ist eine katalytisch aktive Komponente 4 aus Platin und eine der angegebenen weiteren Komponenten aufgebracht. Das Cordierit ist porös und weist Hohlräume 7 auf. Die Oberfläche 8 des Cordierit-Grundmaterials 6 ist aber vergleichsweise glatt. Wie oben erläutert, weist dieses Material, die Schicht 10, eine stark zerklüftete Oberfläche 3 auf. Für die katalytisch aktive Komponente 4 ergibt sich somit wiederum eine große, katalytisch aktive Oberfläche. Durch die Wahl von Cordierit als Grundmaterial 6 ergibt sich eine besonders kostengünstige Ausführung. Die katalytisch aktive Komponente 4 dringt auch bis in den Träger 2 ein. Dies führt zu einer niedrigen SO₂-Oxidation.

## Patentansprüche

1. Oxidationskatalysator (1) mit einem Träger (2), auf den eine katalytisch aktive Komponente (4) aufgebracht ist, wobei der Träger (2) TiO₂ und die katalytisch aktive Komponente (4) elementar vorliegendes Platin aufweist,
**dadurch gekennzeichnet, daß** neben dem Platin wenigstens eine der folgenden Verbindungen vorliegt: ZrO₂, Nb₂O₅, CaO.

2. Oxidationskatalysator (1) nach Anspruch 1,
**dadurch gekennzeichnet, daß** der Träger (2) überwiegend aus TiO₂ ausgeführt ist.

3. Oxidationskatalysator (1) nach Anspruch 1,
**dadurch gekennzeichnet, daß** der Träger (2) Cordierit als ein Grundmaterial (6) und TiO₂ als eine auf dem Grundmaterial (6) angeordnete Schicht (10) umfaßt, auf die die katalytisch aktive Komponente (4) aufgebracht ist.

4. Oxidationskatalysator (1) nach einem der vorhergehenden Ansprüche, **dadurch gekennzeichnet, daß** dem TiO₂ WO₃ beigemischt ist.

5. Oxidationskatalysator (1) nach Anspruch 4,
**dadurch gekennzeichnet, daß** das WO₃ dem TiO₂ durch gemeinsames Ausfällen beigemischt ist.

6. Verfahren zur katalytischen Oxidation von Kohlenmonoxid und/oder Ammoniak und/oder Kohlenwasserstoffen in einem Abgasstrom einer Verbrennungsanlage, insbesondere eines Dieselmotors, bei dem der Abgasstrom über die katalytisch aktive Komponente (4) eines Oxidationskatalysators (1) entsprechend einem der Ansprüche 1 bis 5 geleitet wird.

## Claims

1. Oxidation catalyst (1) with a support (2) to which a catalytically active component (4) is applied, the support (2) having TiO₂ and the catalytically active component (4) having platinum in elemental form, **characterized in that** at least one of the following compounds is present in addition to the platinum: ZrO₂, Nb₂O₅, CaO.

2. Oxidation catalyst (1) according to Claim 1, **characterized in that** the support (2) is predominantly made of TiO₂.

3. Oxidation catalyst (1) according to Claim 1, **characterized in that** the support (2) comprises cordierite as a base material (6) and TiO₂ as a layer (10) which is arranged on the base material (6) and to which the catalytically active component (4) is applied.

4. Oxidation catalyst (1) according to one of the preceding claims, **characterized in that** the TiO₂ is admixed with WO₃.

5. Oxidation catalyst (1) according to Claim 4, **characterized in that** the WO₃ is admixed with the TiO₂ by joint precipitation.

6. Process for the catalytic oxidation of carbon monoxide and/or ammonia and/or hydrocarbons in an exhaust-gas stream of a combustion system, in particular of a diesel engine, in which the exhaust-gas stream is passed over the catalytically active component (4) of an oxidation catalyst (1) in a way corresponding to one of Claims 1 to 5.

## Revendications

1. Catalyseur (1) d'oxydation comprenant un support (2), sur lequel est déposé un constituant (4) catalytiquement actif, le support (2) comprenant du TiO₂ et le constituant (4) catalytiquement actif comprenant du platine présent sous forme élémentaire,
**caractérisé en ce qu'**outre le platine, il y a au moins l'un des composés suivants :
ZrO₂, Nb₂O₅, CaO.

2. Catalyseur (1) d'oxydation suivant la revendication 1,
**caractérisé en ce que** le support (2) est principalement en TiO₂.

3. Catalyseur (1) d'oxydation suivant la revendication 1,
**caractérisé en ce que** le support (2) comprend de la cordiérite en tant que matériau (6) de base et du TiO₂ en tant que l'une des couches (10) disposée sur le matériau (6) de base, couche sur laquelle est déposé le constituant (4) catalytiquement actif.

4. Catalyseur (1) d'oxydation suivant l'une des revendications précédentes, **caractérisé en ce que** du WO₃ est mélangé au TiO₂.

5. Catalyseur (1) d'oxydation suivant la revendication 4, **caractérisé en ce que** le WO₃ est mélangé au TiO₂ par précipitation conjointe.

6. Procédé d'oxydation catalytique du monoxyde de carbone et/ou de l'ammoniac et/ou d'hydrocarbures d'un courant d'effluent gazeux d'un système de combustion, notamment d'un moteur diesel, dans lequel le courant d'effluent gazeux est envoyé sur le constituant (4) catalytiquement actif d'un catalyseur (1) d'oxydation suivant l'une des revendications 1 à 5.
